# EUROPEAN PATENT APPLICATION

(11) **EP 4 607 905 A1**
(43) Date of publication of application: **27.08.2025**
(21) Application number: 25157942.1
(22) Date of filing: 14.02.2025
(51) Int. Cl.: H04M 3/436, G10L 15/26, H04M 7/00

(54) **CONTENT DETECTION FOR VOICE CALLS**

(30) Priority: 23.02.2024 US 202463557443 P; 21.05.2024 US 202418670596
(71) Applicant: Microsoft Technology Licensing, LLC, Redmond, WA 98052 (US)
(72) Inventor: CURRIE, Douglas, Redmond, 98052 (US); REEKIE, David William Maxwell, Redmond, 98052 (US); RUSSELL, Matthew John, Redmond, 98052 (US); BRADLEY, Adam, Redmond, 98052 (US); SMITHSON, Huw James, Redmond, 98052 (US); STRATTON, Sophie, Redmond, 98052 (US)
(74) Representative: CMS Cameron McKenna Nabarro Olswang LLP

(57) **Abstract**

Characteristics of a voice call in a telecommunications network are identified. A voice call that is in process in the telecommunications network is accessed and, for a specified segment of the voice call, a sample of the voice call is analyzed. Based on the analysis, a prompt is generated for input to a machine learning model. The prompt is usable to prompt the machine learning model to determine a likelihood that the voice call meets one or more characteristics. The prompt includes an example of a different voice call that meets the one or more characteristics.

## Description

### PRIORITY APPLICATION

This application claims the benefit of and priority to U.S. Provisional Application No. 63/557,443, filed February 23, 2024.

### BACKGROUND

The growth of fraudulent calls placed over telecommunication networks has continued to grow. If a recipient answers a fraudulent call, a fraudulent caller may attempt to obtain personal information, transfer money to an unauthorized account, or otherwise subject the victim to some type of scam. A carrier network can implement a scam alerting mechanism using, for example, a scam telephone number database that includes a list of suspicious telephone numbers. However, the scam telephone number database may not have a complete list of all suspicious telephones. Furthermore, scammers have become more sophisticated and can defeat scam alerting methods by spoofing telephone numbers or other methods. An operator providing communications services can have thousands or millions of users and the ability to provide safe and reliable services can be an important differentiator for communications services.

It is with respect to these considerations and others that the disclosure made herein is presented.

### SUMMARY

Methods and systems are disclosed for integrating a cloud service provider with a telecommunication operator's voice network to transcribe calls (using, for example, speech-to-text technology) and evaluating the transcript using a language model such as generative pre-trained transformer (GPT) to determine the likelihood that the call meets characteristics indicative of a category of interest and initiate a responsive action, such as providing a notification to the user. Determination of such characteristics can include determining the likelihood that the call is fraudulent. The disclosed embodiments provide a way to securely bridge traditional VoIP technology in operators' networks and artificial intelligence (AI) models hosted in the public cloud to provide services such as protection against fraud while maintaining security and privacy of phone call content. A range of notifications can be provided depending on the subscriber's needs, including SMS notifications, in-call intervention including interactive features and injected speech (e.g., via AI text-to-speech technology), or invoking a risk assessment application programming interface (API) at the operator that allows the evaluation to be used in a broader information context. The described technologies can be used to detect other types of situations and contexts as well.

This Summary is not intended to limit the scope of the claimed subject matter. Furthermore, the claimed subject matter is not limited to implementations that solve any or all disadvantages noted in any part of this disclosure.

### DESCRIPTION OF THE DRAWINGS

The Detailed Description is described with reference to the accompanying FIGS. In the FIGS., the left-most digit(s) of a reference number identifies the FIG. in which the reference number first appears. The same reference numbers in different FIGS. indicate similar or identical items.
FIG. 1A is a diagram illustrating an example architecture according to one embodiment disclosed herein.
FIG. 1B is a diagram illustrating an example architecture according to one embodiment disclosed herein.
FIG. 1C is a diagram illustrating an example architecture according to one embodiment disclosed herein.
FIG. 1D is a diagram illustrating an example architecture according to one embodiment disclosed herein.
FIG. 1E is a diagram illustrating an example architecture according to one embodiment disclosed herein.
FIG. 2 is a diagram illustrating an example architecture according to one embodiment disclosed herein.
FIG. 3 is a diagram showing aspects of an example system according to one embodiment disclosed herein.
FIG. 4 is a diagram showing aspects of an example system according to one embodiment disclosed herein.
FIG. 5 is a flow diagram showing aspects of an illustrative routine, according to one embodiment disclosed herein.
FIG. 6 is a computer architecture diagram illustrating aspects of an example computer architecture for a computer capable of executing the software components described herein.
FIG. 7 is a data architecture diagram showing an illustrative example of a computer environment.

### DETAILED DESCRIPTION

There is an increasing amount of fraud being committed over telephone calls, for example using scripted scams or inducing victims into dialing a telephone line operated by scammers. Furthermore, network operators are increasingly being held responsible for protecting subscribers. Many existing protections have diminishing effectiveness such as those based on number identification or calling patterns, especially as modern telephony makes it easy for scammers to spoof numbers and disguise their location.

The present disclosure provides a way for a service provider to access an active voice call and form a judgment as to how likely the call involves fraudulent activity based on the content of the call. The judgment can be based on a threshold and a notification or other action can be initiated when the threshold is met. In some examples, the subscriber can be directly notified by placing the call on hold and providing an audio notification to the subscriber. In another example, an SMS message can be sent to the subscriber. Alternatively, a separate phone call can be placed to that subscriber or a trusted third party. Fraud is one type of call content that can be the subject of the present disclosure. The disclosed techniques can be used to determine whether a call involves other types of topics or content, such as medical emergencies.

As used herein, the fraud detection service can also be referred to as voice fraud detection service or call protection. Other types of detection can be provided as further described below, in which case the service can be referred to as a voice call detection service or call content detection.

In some examples, information regarding the potentially fraudulent call can be provided to the network operator or other entity to provide additional opportunities for intervention. In one embodiment, an API can be provided so that entities such as a bank can be provided timely information so that fraudulent transactions can be prevented. The API can provide or respond to a query to indicate that a customer of the bank is engaged in a potentially fraudulent situation.

The disclosed embodiments enable a service provider to access an active call, analyze the content of the call to determine characteristics and risks, and to take proactive actions in response to the determination. The disclosed embodiments can involve both incoming calls as well as outgoing calls, and the embodiments can be applied to individual users as well as larger scale users such as enterprises which may involve different scripts and patterns. The analysis of a call can be augmented by metadata, such as data that indicates that the caller is a known or regular caller which may reduce the risk that a call is fraudulent.

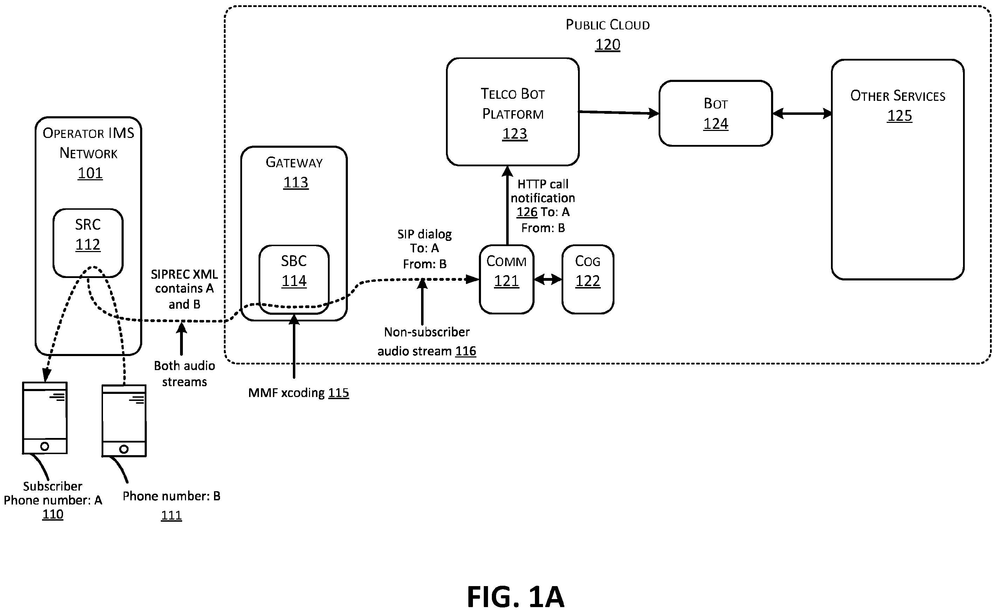

In an embodiment, the content of a call can be analyzed using a machine learning model such as a language model. With reference to FIG. 1A, an operator network 101 includes a subscriber 110 receiving a phone call from another device 111 and the operator network 101 providing access to the call from source 112. In an example, the operator's subscribers can access platform applications by dialing a PSTN number or answering a call from the platform. In an embodiment, access may be provided using, for example, Session Recording Protocol (SIPREC). The audio stream may be provided via gateway 113 and session border controller (SBC) 114, which can also provide message manipulation function (MMF) 115. Non-subscriber audio stream 116 may be provided to communications services 121 and cognitive services 122 A call notification 126 is provided to bot platform 123 which communicates with bot 124. Bot platform 123 can be a platform for creating cloud-based services that can interact with phone calls and media streams. Bot platform 123 can include reference applications (bots) that can be customized to specific needs. Other services 125 can include prompt generation and interfaces to a LLM. In an embodiment, the operator uses an existing network function (NF) in their network to generate a SIPREC session for the call and send the recording to the SBC on an adjacency, which can be dedicated. If the SIPREC session contains two SDP audio streams, the SBC runs MMF which strips the callee's audio stream and leaves only the caller's audio - where it is assumed that the caller is the potential scammer. The SBC sends this audio on to the communication services as a regular RFC3261 SIP call. The communication services receive a call with the "from" and "to" numbers set to the original caller and callee numbers.

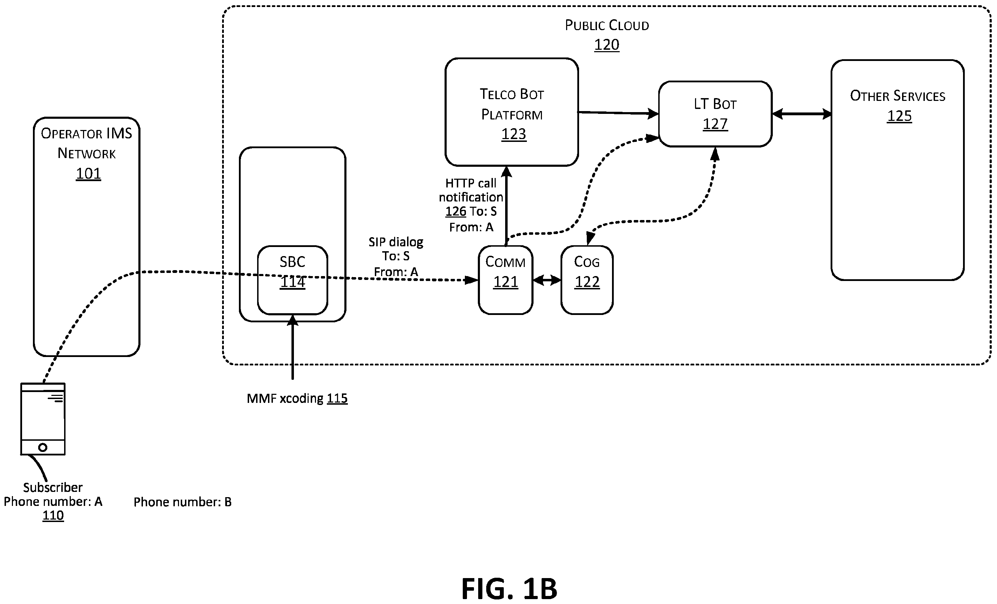

Referring to FIG. 1B, the figure illustrates an embodiment where model the platform 123 receives one-way pre-mixed media streams for selected phone calls from the operator 101. With reference to FIG. 1B, operator network 101 includes a subscriber 110 in communication with services provided in public cloud 120 via SBC 114 which can also provide MMF transcoding 115. The SIP dialog may be provided to communications services 121 and cognitive services 122 A call notification 126 is provided to bot platform 123 which communicates with LT bot 127. Other services 125 can include prompt generation and interfaces to a LLM. In an embodiment, instead of sending a SIPREC session to the communications services, the operator assigns a PSI (IMS Public Service Identity) as the "service number" to dial, and routes calls to it to the SBC. This can be a dedicated adjacency. The SBC forwards these calls to the communications services. The communications services receive a call with the "from" number set to the original caller number, and the "to" number set to the PSI.

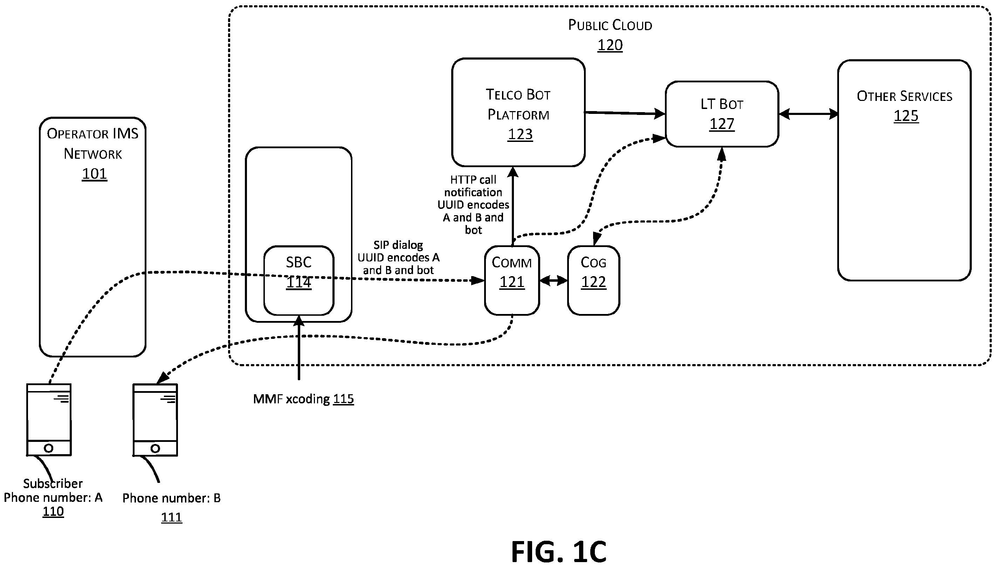

Referring to FIG. 1C, the figure illustrates an embodiment where a call is being provided through the cloud service provider. With reference to FIG. 1C, operator network 101 includes a subscriber 110 in communication with services provided in public cloud 120 via SBC 114 which can also provide MMF transcoding 115. The SIP dialog may be provided to communications services 121 and cognitive services 122 Communications services 121 provides communications with UE 111. A call notification 126 is provided to bot platform 123 which communicates with LT bot 127. Other services 125 can include prompt generation and interfaces to a LLM. In an embodiment, the operator routes applicable calls to the SBC on an adjacency, which can be dedicated. The SBC runs MMF which encodes the caller and callee numbers, session case (call direction), and desired voice AI service in the SIP signaling within a UUI header. The SBC then sends the call on to the communications services 121. The platform 123 decodes the information in the UUI header, which includes the bot to invoke. The platform then dials out to the original target.

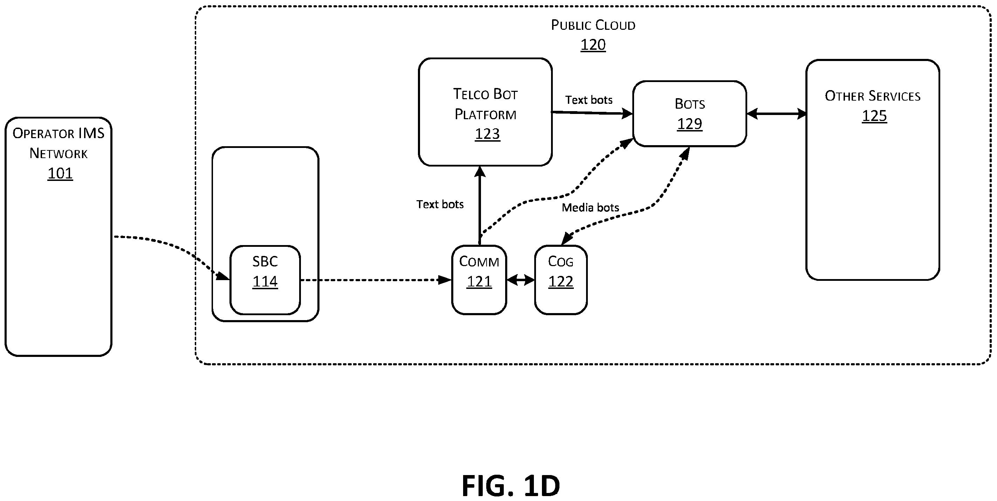

Referring to FIG. 1D, the figure illustrates an example where media bots 129 are configured to interact with communications services 121 and cognitive services 122 to enable the techniques described herein.

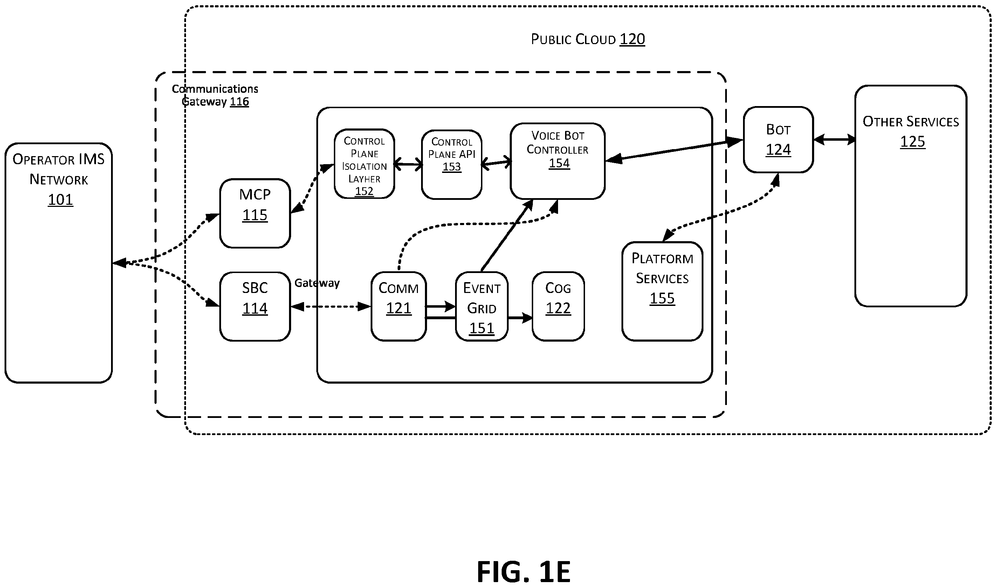

Referring to FIG. 1E, the figure illustrates an example where call integration and call control are provided by mobile control point (MCP) 115. Event grid 151 notifies the bot controller 154 of events such as incoming calls. Control plane API 153 can be a semantic API defining operations and events that are used to communicate with the telco network. Control plane isolation layer 152 can be implemented as layer of mapping code to translate between the control plane API 153 and functions providing call integration. Communications services 121 can be configured for call control and media mixing, extraction, and injection. Voice bot controller 154 coordinates incoming events and outgoing requests from the control plane API 153, communications services 121, event grid 151, and bot(s) 124. Cognitive services 122 can be configured to provide speech-to-text (STT) and text-to-speech (TTS). Communications services 121 can include various functions such as:
- Termination of RFC 3261 SIP calls from the gateway, and exposing the signaling information to the platform - to/from, session case, and any UUI SIP headers. This enables the platform to determine which bot / service to invoke for each call.
- Decoding of the media from the wire codec coming from the gateway into PCM which may be needed, for example, for STT. This also allows injection of media back into the call - audio SFX or translated speech, for example.

In an embodiment, the call contents can be converted to text using STT technologies. The text can be wrapped with a custom-generated prompt that is input to a language model such as ChatGPT.

In one embodiment, the prompt can request an output that indicates a probability as to whether the input text involves a fraudulent call. The probability can be used to make a determination as to the risk of fraud based on a desired sensitivity. Other types of outputs can also be requested, such as placing the result into a category such as "yes," "no," and "possible."

In an embodiment, the language model can further be requested to provide a basis or reasoning for the categorization or probability that is output by the language model. The basis or reasoning can be used to inform the form or content of the responsive action such as a notification that is provided to the subscriber or third party. This in turn may help users determine how to respond to the notification. For example, the call may be placed on hold and a notification can be provided to the subscriber so that the subscriber can determine whether to proceed with the call or terminate the call.

In an embodiment, the voice call can be divided into utterances. The end of an utterance can be designated and a new utterance can begin when a pause in the call is detected that exceeds some threshold such as a time threshold. A grouping of utterances can be collected and sent to the language model for analysis. In an embodiment, each utterance can be sent for analysis. In some embodiments, every nth utterance can be sent for analysis. In one embodiment, a sliding window can be implemented where the *n* most recent utterances are sent for analysis. The entire call can be sent as well. In some embodiments, longer transcripts can be summarized or otherwise condensed before being analyzed. The length of *n* can be determined based on a threshold.

In response to determining that a fraudulent call has been detected, the call is no longer analyzed and the focus shifts to responsive actions. Similarly, after a threshold amount of time, it can be determined that a call is not fraudulent, and the call is no longer analyzed. In some embodiments, an ongoing call that was originally determined to be non-fraudulent can be revisited at a later time to determine if the call has the potential to become fraudulent.

The length of time and the degree to which a call is analyzed can be determined based on a balance of cost and quality. In an embodiment, the length of time and the degree to which a call is analyzed can be optimized to provide the maximum possible quality for a given cost.

As discussed, an interface such as an API can be provided that enables access to entities such as a financial institution. The interface can provide real time notifications of a fraud risk for a given call. When a request is sent to a financial institution to perform a transaction by one of their customers, the financial institution can query the API, which can indicate that the customer is currently on a call and provide the risk that the call is fraudulent. The financial institution can determine whether to enable the requested transaction based on the information.

The determination in such cases can include the type of information that is being discussed such as a PIN number being requested. Providing such a real time interface can provide timely information to enable the institution to intervene before such crucial information is provided, which can often be difficult or impossible to reverse once transacted.

The notifications to the caller can include out of band notifications such as sending an SMS or alerting the carrier network so that the carrier can perform an action such as placing a notification phone call to the caller or a third party which may be useful for some types of users who are vulnerable.

The notifications can include the reasoning for the notification which can provide additional useful information to determine an appropriate course of action. The information can be provided in real time, which can be useful during multifactor authentication where information about an ongoing call can be used to determine if an SMS or other message providing codes or other information should be sent to authenticate a user.

Responsive actions in response to a fraud detection can include terminating the call, adding the fraudulent party to a blocked caller list, and maintaining information related to the call in the event that the record is needed for further investigation.

In some embodiments, aspects of the present disclosure may be implemented in a mobile edge computing (MEC) environment implemented in conjunction with a 4G, 5G, or other cellular network. MEC is a type of edge computing that uses cellular networks and 5G and enables a data center to extend cloud services to local deployments using a distributed architecture that provide federated options for local and remote data and control management. MEC architectures may be implemented at cellular base stations or other edge nodes and enable operators to host content closer to the edge of the network, delivering high-bandwidth, low-latency applications to end users. For example, the cloud provider's footprint may be co-located at a carrier site (e.g., carrier data center), allowing for the edge infrastructure and applications to run closer to the end user via the 5G network.

Referring to the appended drawings, in which like numerals represent like elements throughout the several FIGURES, aspects of various technologies for generating and using prompts will be described. In the following detailed description, references are made to the accompanying drawings that form a part hereof, and which are shown by way of illustration specific configurations or examples.

In an embodiment, the disclosed embodiments can be implemented on a platform that is configured to execute bots to provide functionality and that enables telecoms operators to create cloud-based services that can interact with phone calls and media streams running inside their core network. Such a bot platform can include reference applications (bots) which telecoms operators can customize as needed.

Additionally, the disclosed services include an architecture where voice calls in an operator network are integrated with the cloud service platform which includes the bot platform. The disclosed embodiments can include call integration and call control, including over the call signaling and media mixing and stream access. The disclosed services can include STT and TTS.

In one embodiment, the operator's subscribers access the platform applications by explicitly dialing a PSTN number (either directly, or dialing into an existing multiparty call), or explicitly answering a call from the platform. In this form of call integration, the cloud provider hosts a PSTN number, and call control is performed within the cloud provider's communications services.

In another embodiment, the platform receives one-way pre-mixed media streams for selected phone calls from the operator network. The call integration is performed by an element in the operator network, with connectivity provided by the SBC.

In another embodiment, call integration can be performed by a component in the gateway such as a mobile control point (MCP) component. The call integration can also be performed by an operator's existing TAS using an OMA-styled HTTP REST interface. In an example, a call enters the operator IMS network and the MCP is invoked. The MCP calls a consultation API via the Control Plane API/Isolation Layer. If a bot is to be invoked for the subscriber, a Temporary Routing Number (TRN) is returned. Information pertinent to the call can be stored for later use (the assigned TRN, the caller and callee details, etc.). If a bot is invoked, the MCP redirects the call to the TRN. This call is routed to the communications services using the SBC. The communications services provide a notification using the event grid function, and the incoming ACS call is correlated with the previously stored call information. Depending on the bot use case, one or more of the following if performed:
- Dial back out via the operator network to the original intended target of the call.
- Connect these two calls to a communications services conference resource, thus establishing the originally intended 1-1 call.
- Start performing STT on the call and pass input to the bot.
- Instruct the communications services to perform various call control actions.
- Drop the bot off the call

In some embodiments, call control can be performed by a gateway. In this case the MCP redirects the call to the gateway. The MCP sets up another call to the original target and the gateway and the gateway conferences them together, thus establishing the originally intended 1-1 call. When instructed, the MCP sets up another call which is routed to the communications services using the SBC. The communications services notify the platform using the event grid, and the incoming call is correlated with the previously stored call information. The call is anchored in the MCP with media mixing performed in the gateway. Depending on the bot use case, one or more of the following is performed:
- Start performing STT on the call and pass input to the bot.
- Instruct the MCP to perform various call control actions.
- Instruct the MCP to drop the bot off the call.

In another embodiment, responsibility for call control is performed by the Mo MCP component or an operator's existing TAS using an OMA-styled HTTP REST interface. In an embodiment, STT and TTS processing can be performed on-premises.

In one embodiment, two types of bots can be implemented - text bots and media-streaming bots. For text bots, the communications services perform STT on the call and delivers text to the bot, which can be coordinated by the platform. The communications services can use a cognitive services function to perform such functions.

In some embodiments, media-streaming bots can be implemented, where the communications services streams media directly to the bot, and the bot relays the stream to other services. This enables bots to perform functions other than performing STT on the call. Streaming media to cognitive services STT APIs may provide lower latencies in some cases. Thus, the architecture can support media streaming and direct interfacing to cognitive services to perform STT, and deliver the same text interface to text bots. The bots can be text bots receiving text from the platform or media-streaming bots which receive media from communications services. The bots can perform analysis of the media stream. Example applications can include using AI emotion detection on the call audio to provide a further datapoint that can contribute to the fraud analysis; or using an AI deepfake detection algorithm to identify deepfake audio, and thereby contribute to the fraud analysis decision.

There can be a platform-level configuration for invoking the bot: The voice call detection service may be configured as the "default bot" and any call received by the platform which is not identified as a translation call can be considered a voice call detection service call.

The voice call detection service listens to a single audio stream on terminating calls (the non-subscriber, i.e. potential scammer). The voice call detection service collects the call transcript throughout the call and periodically sends the transcript to an OpenAI LLM asking for a fraud assessment, resulting in, for example, a classification of good / suspect / gray area. This collection and classification can be configured (LLM model, timings, durations, thresholds, etc.). In some embodiments, small language models (SLMs) can be utilized to reduce costs and provide more targeted functionality.

In some embodiments, additional techniques can be applied to perform fraud analysis, including using LLM analysis of call audio to make a determination of whether the caller/callee already know each other, and using an ML layer to screen call audio transcripts with certain characteristics in real-time, before only passing a subset to the LLM for further processing (e.g. to reduce processing costs).

In the case of suspect / gray area detections, one or more target SMS numbers can be configured for notification. The notification can be sent using the communications services (e.g., from a configured alphanumeric sender ID). In an embodiment, this can be pre-canned warning text concatenated with justification from the LLM.

In some configurations, transcripts can be sampled and stored, and can be retrieved and post-processed, for example to further investigate or assess the accuracy of the service.

While the described illustrations are provided in the context of fraud detection, the disclosed embodiments can be implemented to detect various different kinds and content of voice calls. For example, the disclosed embodiments can be implemented to perform real time large language model analysis of a call and enable real time response for the following:
∘ Enterprise spear phishing detection
∘ Child monitor (bullying / grooming / gang / drugs etc.)
∘ In-call assistant, e.g.:
   ▪ Summarize the call thus far for someone newly joining a 3 way call or meeting
   ▪ Answer simple web search type questions "remind me, what was Microsoft's annual revenue in 2010"
   ▪ Automatic receptionist
∘ In-call coach, e.g.:
   ▪ Negotiation coach (e.g. insurance, mobile phone contract)
   ▪ Skilled worker coach (e.g. sales, legal, financial, medical)
   ▪ Sentiment analysis coach
∘ Pro-active outbounds calling:
   ▪ Vulnerable person check-in
   ▪ Dating check-in

- Real time call transcription for later LLM AI processing
   ∘ Call summarization
   ∘ Call note taker - store call text in database and allow later query through web or voice GUI "summarize the calls I had today" "what was the address Matt gave me on the call this afternoon?"
   ∘ PA / scheduler
- Real time other AI (not LLM) analysis of the call, with real time action:
   ∘ Real time language translation

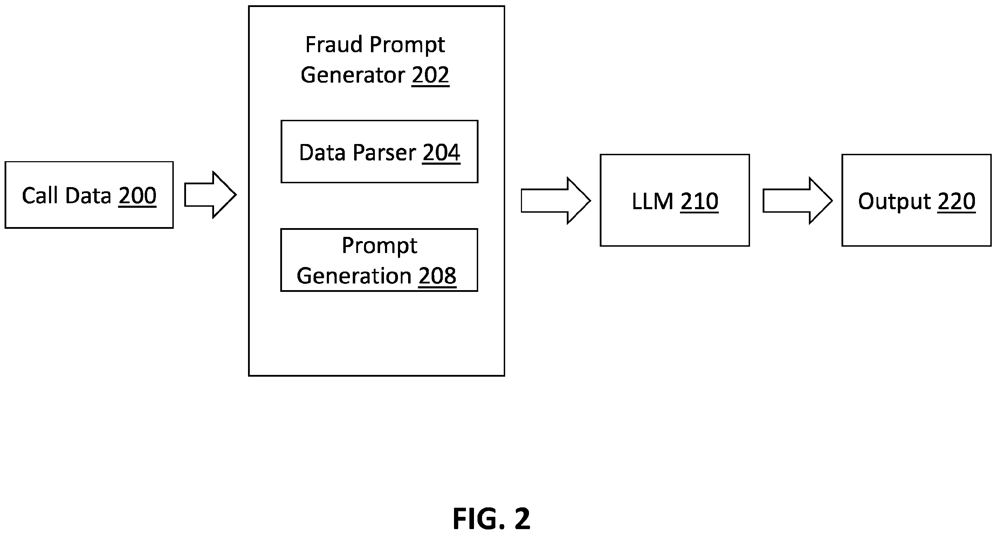

With reference to FIG. 2, illustrated is an example system for identifying potential fraud for a voice call in a telecommunications network. A fraud prompt generator 202 receives call data 200. A data parser 204 takes the input call data to identify content and structure of the call data 200 and provides the parsed data to a prompt generator 208 which generates a prompt for input to a LLM 210. LLM 210 uses the prompt to generate an output 220.

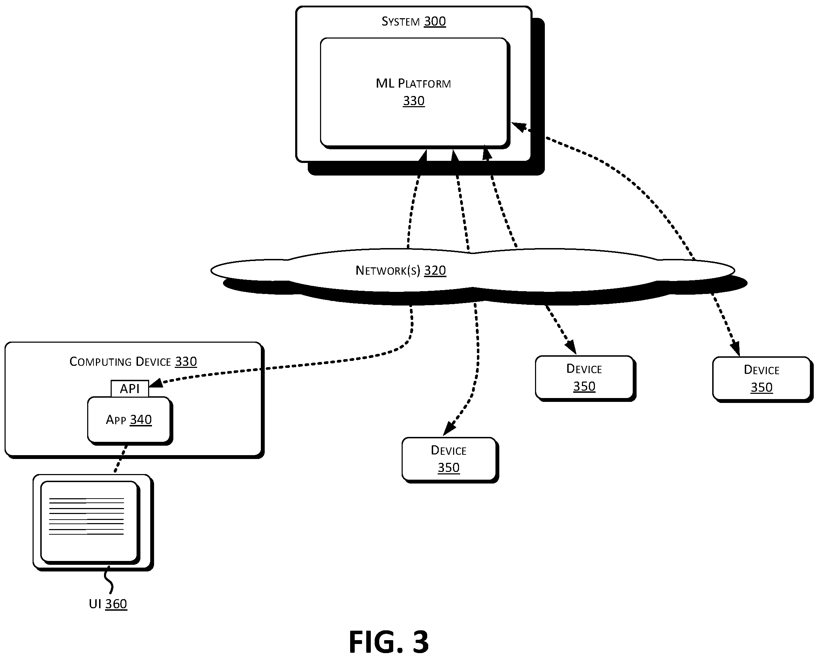

In various embodiments, the machine learning model(s) may be run locally on the client. In other embodiments, the machine learning inferencing can be performed on a server of a network. For example, in the system illustrated in FIG. 3, a system 300 is illustrated that implements ML platform 330. The ML platform 330 may be configured to provide output data to various devices 350 over a network 320, as well as computing device 330. A user interface 360 may be rendered on computing device 330. The user interface 360 may be provided in conjunction with an application 340 that communicates to the ML platform 330 using an API via network 320. In some embodiments, system 300 may be configured to provide issue identification information to users. In one example, ML platform 330 may implement a machine learning system to perform one or more tasks. The ML platform 330 utilizes the machine learning system to perform tasks such as root cause identification. The machine learning system may be configured to be optimized using the techniques described herein.

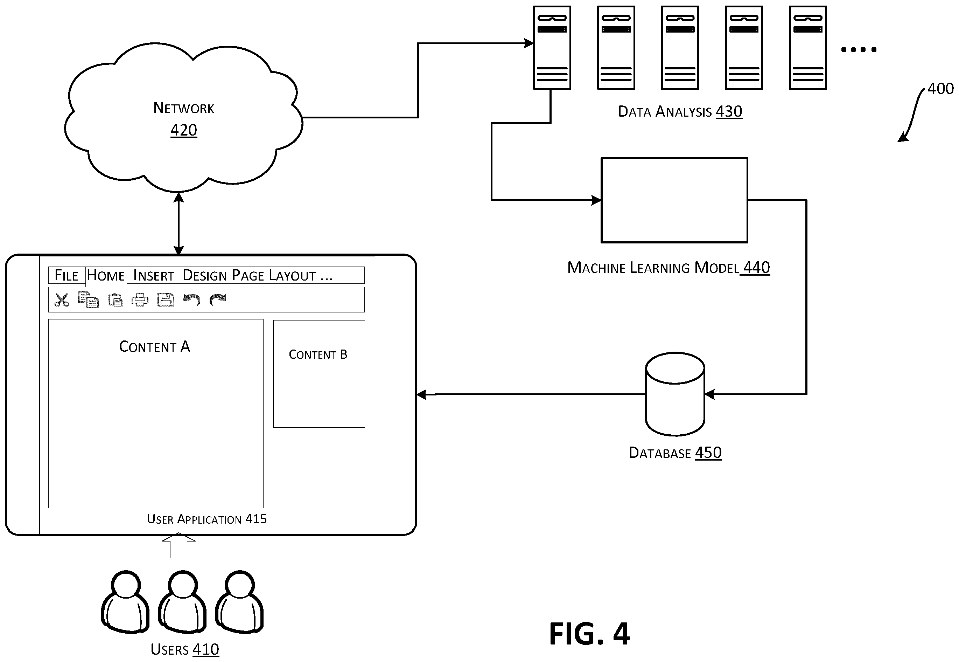

FIG. 4 is a computing system architecture diagram showing an overview of a system disclosed herein for implementing a machine learning model, according to one embodiment disclosed herein. As shown in FIG. 4, a machine learning system 400 may be configured to perform analysis and perform identification, prediction, or other functions based upon various data collected by and processed by data analysis components 430 (which might be referred to individually as an "data analysis component 430" or collectively as the "data analysis components 430"). The data analysis components 430 may, for example, include, but are not limited to, physical computing devices such as server computers or other types of hosts, associated hardware components (e.g., memory and mass storage devices), and networking components (e.g., routers, switches, and cables). The data analysis components 430 can also include software, such as operating systems, applications, and containers, network services, virtual components, such as virtual disks, virtual networks, and virtual machines. Database 450 can include data, such as a database, or a database shard (i.e., a partition of a database). Feedback may be used to further update various parameters that are used by machine learning model 420. Data may be provided to the user application 415 to provide results to various users 410 using a user application 415. In some configurations, machine learning model 420 may be configured to utilize supervised and/or unsupervised machine learning technologies. A model compression framework based on sparsity-inducing regularization optimization as disclosed herein can reduce the amount of data that needs to be processed in such systems and applications. Effective model compression when processing iterations over large amounts of data may provide improved latencies for a number of applications that use such technologies, such as image and sound recognition, recommendation systems, and image analysis.

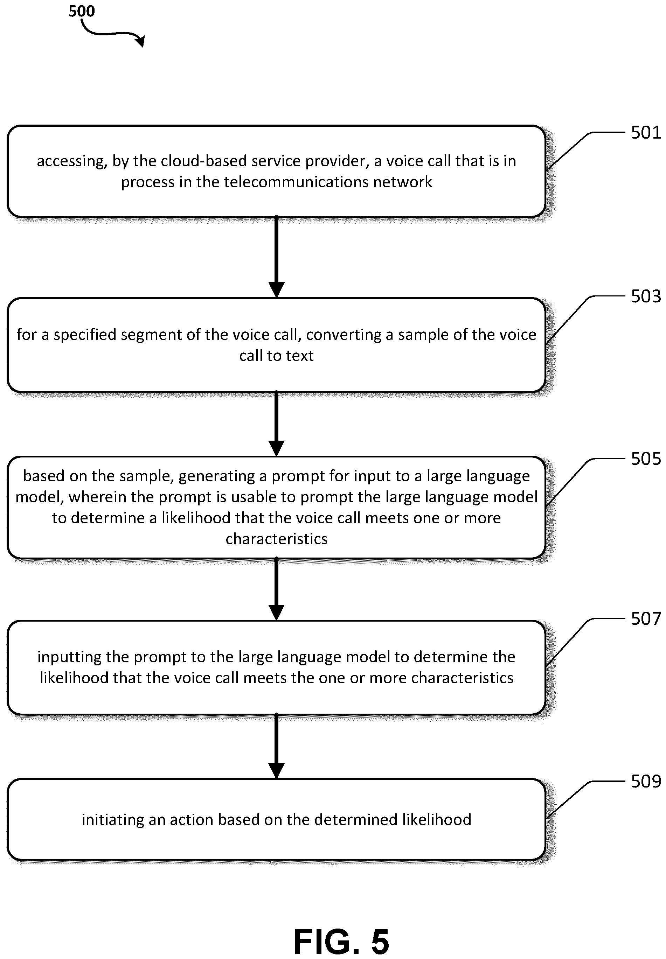

Turning now to FIG. 5, illustrated is an example operational procedure for determining, by a cloud-based service provider, characteristics of a voice call in a telecommunications network in accordance with the present disclosure. The operational procedure may be implemented in a system comprising one or more computing devices.

It should be understood by those of ordinary skill in the art that the operations of the methods disclosed herein are not necessarily presented in any particular order and that performance of some or all of the operations in an alternative order(s) is possible and is contemplated. The operations have been presented in the demonstrated order for ease of description and illustration. Operations may be added, omitted, performed together, and/or performed simultaneously, without departing from the scope of the appended claims.

It should also be understood that the illustrated methods can end at any time and need not be performed in their entireties. Some or all operations of the methods, and/or substantially equivalent operations, can be performed by execution of computer-readable instructions included on a computer-storage media, as defined herein. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like. Although the example routine described below is operating on a computing device, it can be appreciated that this routine can be performed on any computing system which may include a number of computers working in concert to perform the operations disclosed herein.

Thus, it should be appreciated that the logical operations described herein are implemented (1) as a sequence of computer implemented acts or program modules running on a computing system such as those described herein and/or (2) as interconnected machine logic circuits or circuit modules within the computing system. The implementation is a matter of choice dependent on the performance and other requirements of the computing system. Accordingly, the logical operations may be implemented in software, in firmware, in special purpose digital logic, and any combination thereof.

Referring to FIG. 5, operation 501 illustrates accessing, by the cloud-based service provider, a voice call that is in process in the telecommunications network, wherein the voice call is serviced by a mobile operator of the telecommunications network.

Operation 503 illustrates for a specified segment of the voice call, converting, by the cloud-based service provider, a sample of the voice call to text.

Operation 505 illustrates based on the converted sample of text, generating, by the cloud-based service provider, a prompt for input to a large language model, wherein the prompt is usable to prompt the large language model to determine a likelihood that the voice call meets one or more characteristics, wherein the prompt includes an example of a different voice call that meets the one or more characteristics.

Operation 507 illustrates inputting the prompt to the large language model to determine the likelihood that the voice call meets the one or more characteristics.

Operation 509 illustrates initiating, by the cloud-based service provider, an action based on the determined likelihood.

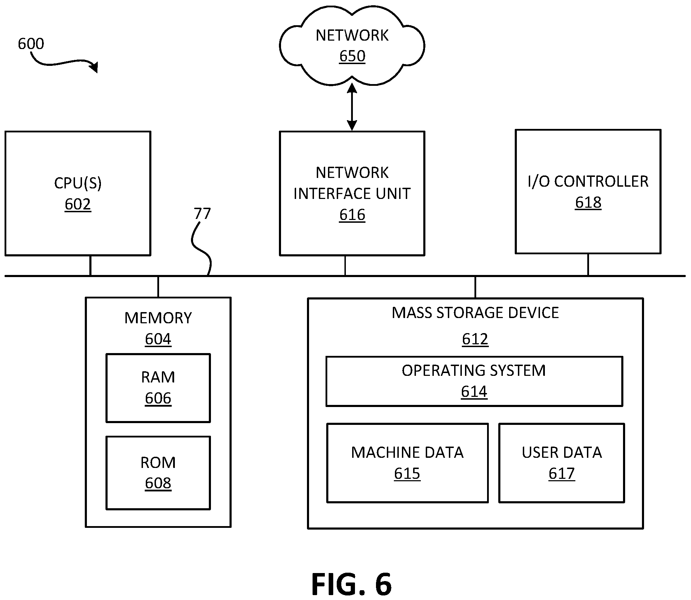

FIG. 6 shows an example computer architecture for a computer capable of providing the functionality described herein such as, for example, a computing device configured to implement the functionality described above with reference to FIGS. 1-6. Thus, the computer architecture 600 illustrated in FIG. 6 illustrates an architecture for a server computer or another type of computing device suitable for implementing the functionality described herein. The computer architecture 600 might be utilized to execute the various software components presented herein to implement the disclosed technologies.

The computer architecture 600 illustrated in FIG. 6 includes a central processing unit 602 ("CPU"), a system memory 604, including a random-access memory 606 ("RAM") and a read-only memory ("ROM") 608, and a system bus 77 that couples the memory 604 to the CPU 602. A firmware containing basic routines that help to transfer information between elements within the computer architecture 600, such as during startup, is stored in the ROM 608. The computer architecture 600 further includes a mass storage device 612 for storing an operating system 614, other data, such as product data 615 or user data 617.

The mass storage device 612 is connected to the CPU 602 through a mass storage controller (not shown) connected to the bus 77. The mass storage device 612 and its associated computer-readable media provide non-volatile storage for the computer architecture 600. Although the description of computer-readable media contained herein refers to a mass storage device, such as a solid-state drive, a hard disk or optical drive, it should be appreciated by those skilled in the art that computer-readable media can be any available computer storage media or communication media that can be accessed by the computer architecture 600.

Communication media includes computer readable instructions, data structures, program modules, or other data in a modulated data signal such as a carrier wave or other transport mechanism and includes any delivery media. The term "modulated data signal" means a signal that has one or more of its characteristics changed or set in a manner as to encode information in the signal. By way of example, and not limitation, communication media includes wired media such as a wired network or direct-wired connection, and wireless media such as acoustic, radio frequency, infrared and other wireless media. Combinations of the any of the above should also be included within the scope of computer-readable media.

By way of example, and not limitation, computer-readable storage media might include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer architecture 600. For purposes of the claims, the phrase "computer storage medium," "computer-readable storage medium" and variations thereof, does not include waves, signals, and/or other transitory and/or intangible communication media, per se.

According to various implementations, the computer architecture 600 might operate in a networked environment using logical connections to remote computers through a network 650 and/or another network (not shown). A computing device implementing the computer architecture 600 might connect to the network 650 through a network interface unit 616 connected to the bus 77. It should be appreciated that the network interface unit 616 might also be utilized to connect to other types of networks and remote computer systems.

The computer architecture 600 might also include an input/output controller 618 for receiving and processing input from a number of other devices, including a keyboard, mouse, or electronic stylus (not shown in FIG. 6). Similarly, the input/output controller 618 might provide output to a display screen, a printer, or other type of output device (also not shown in FIG. 6).

It should be appreciated that the software components described herein might, when loaded into the CPU 602 and executed, transform the CPU 602 and the overall computer architecture 600 from a general-purpose computing system into a special-purpose computing system customized to facilitate the functionality presented herein. The CPU 602 might be constructed from any number of transistors or other discrete circuit elements, which might individually or collectively assume any number of states. More specifically, the CPU 602 might operate as a finite-state machine, in response to executable instructions contained within the software modules disclosed herein. These computer-executable instructions might transform the CPU 602 by specifying how the CPU 602 transitions between states, thereby transforming the transistors or other discrete hardware elements constituting the CPU 602.

Encoding the software modules presented herein might also transform the physical structure of the computer-readable media presented herein. The specific transformation of physical structure might depend on various factors, in different implementations of this description. Examples of such factors might include, but are not limited to, the technology used to implement the computer-readable media, whether the computer-readable media is characterized as primary or secondary storage, and the like. If the computer-readable media is implemented as semiconductor-based memory, the software disclosed herein might be encoded on the computer-readable media by transforming the physical state of the semiconductor memory. For example, the software might transform the state of transistors, capacitors, or other discrete circuit elements constituting the semiconductor memory. The software might also transform the physical state of such components in order to store data thereupon.

As another example, the computer-readable media disclosed herein might be implemented using magnetic or optical technology. In such implementations, the software presented herein might transform the physical state of magnetic or optical media, when the software is encoded therein. These transformations might include altering the magnetic characteristics of locations within given magnetic media. These transformations might also include altering the physical features or characteristics of locations within given optical media, to change the optical characteristics of those locations. Other transformations of physical media are possible without departing from the scope of the present description, with the foregoing examples provided only to facilitate this discussion.

**In** light of the above, it should be appreciated that many types of physical transformations take place in the computer architecture 600 in order to store and execute the software components presented herein. It also should be appreciated that the computer architecture 600 might include other types of computing devices, including hand-held computers, embedded computer systems, personal digital assistants, and other types of computing devices known to those skilled in the art.

It is also contemplated that the computer architecture 600 might not include all of the components shown in FIG. 6, might include other components that are not explicitly shown in FIG. 6, or might utilize an architecture completely different than that shown in FIG. 6. For example, and without limitation, the technologies disclosed herein can be utilized with multiple CPUS for improved performance through parallelization, graphics processing units ("GPUs") for faster computation, and/or tensor processing units ("TPUs"). The term "processor" as used herein encompasses CPUs, GPUs, TPUs, and other types of processors.

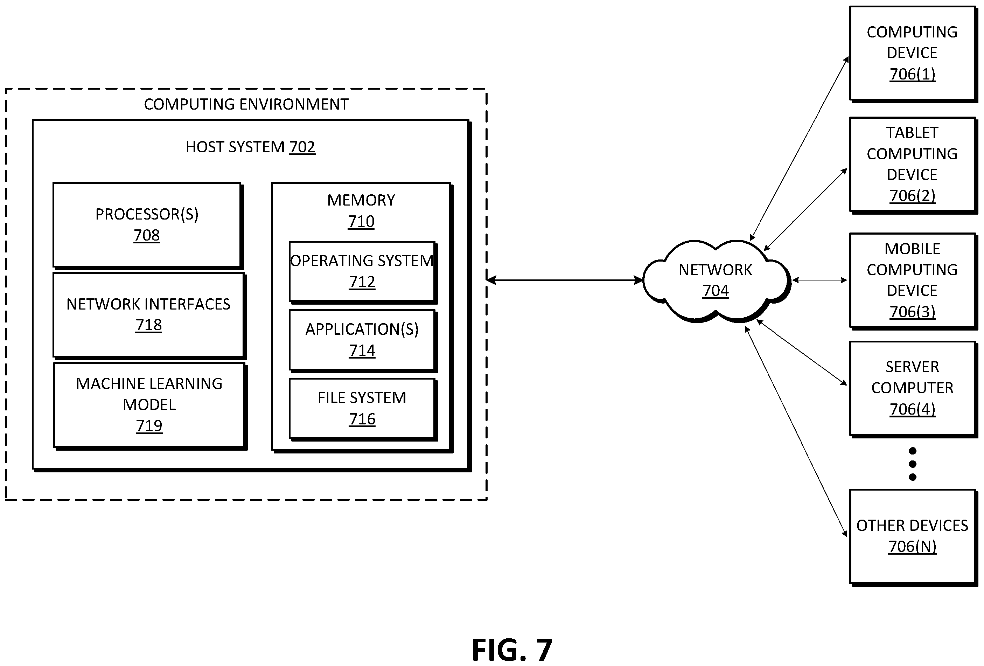

FIG. 7 illustrates an example computing environment capable of executing the techniques and processes described above with respect to FIGS. 1-6. In various examples, the computing environment comprises a host system 702. In various examples, the host system 702 operates on, in communication with, or as part of a network 704.

The network 704 can be or can include various access networks. For example, one or more client devices 706(1)...706(N) can communicate with the host system 702 via the network 704 and/or other connections. The host system 702 and/or client devices can include, but are not limited to, any one of a variety of devices, including portable devices or stationary devices such as a server computer, a smart phone, a mobile phone, a personal digital assistant (PDA), an electronic book device, a laptop computer, a desktop computer, a tablet computer, a portable computer, a gaming console, a personal media player device, or any other electronic device.

According to various implementations, the functionality of the host system 702 can be provided by one or more servers that are executing as part of, or in communication with, the network 704. A server can host various services, virtual machines, portals, and/or other resources. For example, a can host or provide access to one or more portals, Web sites, and/or other information.

The host system 702 can include processor(s) 708 memory 710. The memory 710 can comprise an operating system 712, application(s) 714, and/or a file system 716. Moreover, the memory 710 can comprise the storage unit(s) 82 described above with respect to FIGS. 1-5.

The processor(s) 708 can be a single processing unit or a number of units, each of which could include multiple different processing units. The processor(s) can include a microprocessor, a microcomputer, a microcontroller, a digital signal processor, a central processing unit (CPU), a graphics processing unit (GPU), a security processor etc. Alternatively, or in addition, some or all of the techniques described herein can be performed, at least in part, by one or more hardware logic components. For example, and without limitation, illustrative types of hardware logic components that can be used include a Field-Programmable Gate Array (FPGA), an Application-Specific Integrated Circuit (ASIC), an Application-Specific Standard Products (ASSP), a state machine, a Complex Programmable Logic Device (CPLD), other logic circuitry, a system on chip (SoC), and/or any other devices that perform operations based on instructions. Among other capabilities, the processor(s) may be configured to fetch and execute computer-readable instructions stored in the memory 710.

The memory 710 can include one or a combination of computer-readable media. As used herein, "computer-readable media" includes computer storage media and communication media.

Computer storage media includes volatile and non-volatile, removable and non-removable media implemented in any method or technology for storage of information, such as computer-readable instructions, data structures, program modules, or other data. Computer storage media includes, but is not limited to, phase change memory (PCM), static random-access memory (SRAM), dynamic random-access memory (DRAM), other types of random-access memory (RAM), read-only memory (ROM), electrically erasable programmable ROM (EEPROM), flash memory or other memory technology, compact disk ROM (CD-ROM), digital versatile disks (DVD) or other optical storage, magnetic cassettes, magnetic tape, magnetic disk storage or other magnetic storage devices, or any other medium that can be used to store information for access by a computing device.

In contrast, communication media includes computer-readable instructions, data structures, program modules, or other data in a modulated data signal, such as a carrier wave. As defined herein, computer storage media does not include communication media.

The host system 702 can communicate over the network 704 via network interfaces 718. The network interfaces 718 can include various types of network hardware and software for supporting communications between two or more devices. The host system 702 may also include machine learning model 719.

Although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

In an aspect characteristics of a voice call in a telecommunications network are identified. A voice call that is in process in the telecommunications network is accessed and, for a specified segment of the voice call, a sample of the voice call is analyzed. Based on the analysis, a prompt is generated for input to a machine learning model. The prompt is usable to prompt the machine learning model to determine a likelihood that the voice call meets one or more characteristics. The prompt includes an example of a different voice call that meets the one or more characteristics.

The disclosure presented herein also encompasses the subject matter set forth in the following clauses.

Clause 1: A method of determining, by a cloud-based service provider, characteristics of a voice call in a telecommunications network, the method comprising:
accessing, by the cloud-based service provider, a voice call that is in process in the telecommunications network, wherein the voice call is serviced by a mobile operator of the telecommunications network;
for a specified segment of the voice call, converting, by the cloud-based service provider, a sample of the voice call to text;
based on the converted sample of text, generating, by the cloud-based service provider, a prompt for input to a large language model, wherein the prompt is usable to prompt the large language model to determine a likelihood that the voice call meets one or more characteristics, wherein the prompt includes an example of a different voice call that meets the one or more characteristics;
inputting the prompt to the large language model to determine the likelihood that the voice call meets the one or more characteristics; and
initiating, by the cloud-based service provider, an action based on the determined likelihood.

Clause 2: The method of clause 1, wherein the large language model is a generative pre-trained transformer (GPT) model.

Clause 3: The method of any of clauses 1-2, wherein the characteristics are indicative of fraudulent activity.

Clause 4: The method of any of clauses 1-3, wherein the action is one of sending an SMS message, terminating the call, and interjecting an audio message into the call.

Clause 5: The method of any of clauses 1-4, wherein the action comprises sending information pertaining to the voice call to a third party.

Clause 6: The method of any of clauses 1-5, wherein the sample of the voice call is converted to text as a series of utterances delineated by a pause having a threshold duration.

Clause 7: The method of clauses 1-6, further comprising executing, by the cloud-based service provider, a bot configured to generate the prompt.

Clause 8: A computing system, comprising:
one or more processors; and
a computer-readable storage medium having computer-executable instructions stored thereupon which, when executed by the processor, cause the computing system to perform operations comprising:
   accessing a voice call that is in process in a telecommunications network serviced by a mobile operator;
   for a specified segment of the voice call, performing a direct audio analysis of the specified segment;
   based on the analyzed segment, generating a prompt for input to a machine learning model, wherein the prompt is usable to prompt the machine learning model to determine a likelihood that the voice call meets one or more characteristics, wherein the prompt includes an example of a different voice call that meets the one or more characteristics;
   inputting the prompt to the machine learning model to determine the likelihood that the voice call meets the one or more characteristics; and
   initiating an action at the telecommunications network based on the determined likelihood.

Clause 9: The computing system of clause 8, wherein the machine learning model is a large language model (LLM).

Clause 10: The computing system of any of clauses 8 and 9, wherein the characteristics are indicative of fraudulent activity.

Clause 11: The method of any of clauses 8-10, wherein the action is one of sending an SMS message, terminating the call, and interjecting an audio message into the call.

Clause 12: The method of any of clauses 8-11, wherein the action comprises sending information pertaining to the voice call to a third party.

Clause 13: The method of any of clauses 8-12, wherein the specified segment of the voice call is converted to text as a series of utterances delineated by a pause of a threshold duration.

Clause 14: The method of any of clauses 8-13, further comprising executing a bot configured to generate the prompt.

Clause 15: A computer-readable storage medium having computer-executable instructions stored thereupon which, when executed by a processor of a computing system, cause the computing system to perform operations comprising:
accessing a voice call that is in process in a 5G telecommunications network serviced by a mobile operator;
for a specified segment of the voice call, converting a sample of the voice call to text;
based on the converted sample of text, generating a prompt for input to a large language model, wherein the prompt is usable to prompt the large language model to determine a likelihood that the voice call meets one or more characteristics, wherein the prompt includes an example of a different voice call that meets the one or more characteristics;
inputting the prompt to the large language model to determine the likelihood that the voice call meets the one or more characteristics; and
initiating an action at the telecommunications network based on the determined likelihood.

Clause 16: The computer-readable storage medium of clause 15, wherein the large language model is a generative pre-trained transformer (GPT) model.

Clause 17: The computer-readable storage medium of any of clauses 15 and 16, wherein the characteristics are indicative of fraudulent activity.

Clause 18: The computer-readable storage medium of any of clauses 15-17, wherein the action is one of sending an SMS message, terminating the call, and interjecting an audio message into the call.

Clause 19: The computer-readable storage medium of any of clauses 15-18, wherein the action comprises sending information pertaining to the voice call to a third party.

Clause 20: The computer-readable storage medium of any of the clauses 15-19, wherein the sample of the voice call is converted to text as a series of utterances delineated by a pause of a threshold duration.

## Claims

1. A method of determining, by a cloud-based service provider, characteristics of a voice call in a telecommunications network, the method comprising:
accessing (501), by the cloud-based service provider, a voice call (200) that is in process in the telecommunications network, wherein the voice call is serviced by a mobile operator of the telecommunications network;
for a specified segment of the voice call, converting (503), by the cloud-based service provider, a sample of the voice call to text;
based on the converted sample of text, generating (505), by the cloud-based service provider, a prompt (208) for input to a large language model (210), wherein the prompt is usable to prompt the large language model to determine a likelihood that the voice call meets one or more characteristics, wherein the prompt includes an example of a different voice call that meets the one or more characteristics;
inputting (507) the prompt to the large language model to determine the likelihood that the voice call meets the one or more characteristics; and
initiating (509), by the cloud-based service provider, an action based on the determined likelihood.

2. The method of claim 1, wherein the large language model is a generative pre-trained transformer, GPT, model.

3. The method of any previous claim, wherein the characteristics are indicative of fraudulent activity.

4. The method of any previous claim, wherein the action is one of sending an SMS message, terminating the call, and interjecting an audio message into the call.

5. The method of any previous claim, wherein the action comprises sending information pertaining to the voice call to a third party.

6. The method of any previous claim, wherein the sample of the voice call is converted to text as a series of utterances delineated by a pause having a threshold duration.

7. The method of any previous claim, further comprising executing, by the cloud-based service provider, a bot configured to generate the prompt.

8. A computing system, comprising:
one or more processors; and
a computer-readable storage medium having computer-executable instructions stored thereupon which, when executed by the processor, cause the computing system to perform operations comprising:
accessing (501) a voice call (200) that is in process in a telecommunications network serviced by a mobile operator;
for a specified segment of the voice call, performing a direct audio analysis of the specified segment;
based on the analyzed segment, generating (505) a prompt (208) for input to a machine learning model (210), wherein the prompt is usable to prompt the machine learning model to determine a likelihood that the voice call meets one or more characteristics, wherein the prompt includes an example of a different voice call that meets the one or more characteristics;
inputting (507) the prompt to the machine learning model to determine the likelihood that the voice call meets the one or more characteristics; and
initiating (509) an action at the telecommunications network based on the determined likelihood.

9. The computing system of claim 8, wherein the machine learning model is a large language model, LLM,.

10. The computing system of claim 8 or claim 9, wherein the characteristics are indicative of fraudulent activity.

11. The computing system of any of claims 8 to 10, wherein the action is one of sending an SMS message, terminating the call, and interjecting an audio message into the call.

12. The computing system of any of claims 8 to 11, wherein the action comprises sending information pertaining to the voice call to a third party.

13. The computing system of any of claims 8 to 12, wherein the specified segment of the voice call is converted to text as a series of utterances delineated by a pause of a threshold duration.

14. The computing system of any of claims 8 to 13, further comprising executing a bot configured to generate the prompt.

15. A computer-readable storage medium having computer-executable instructions stored thereupon which, when executed by a processor of a computing system, cause the computing system to perform operations according to any of claims 1 to 7.
